# EUROPEAN PATENT APPLICATION

(11) **EP 4 734 647 A1**
(43) Date of publication of application: **29.04.2026**
(21) Application number: 24825587.9
(22) Date of filing: 09.05.2024
(51) Int. Cl.: H04W 74/02, H04W 72/27, H04W 72/0446, H04W 72/0457, H04W 84/12

(54) **COMMUNICATION DEVICE AND COMMUNICATION METHOD**

(30) Priority: 20.06.2023 JP 2023101116
(71) Applicant: Sony Group Corporation, Tokyo 108-0075 (JP)
(72) Inventor: TANAKA Yusuke, Tokyo 108-0075 (JP)
(74) Representative: D Young & Co LLP
(86) International application number: PCT/JP2024/017314
(87) International publication number: WO 2024/262178

(57) **Abstract**

[Object] To provide a communication apparatus and a communication method that make it possible to check NAV settings on other channels when a secondary channel access is performed.

[Solving Means] A communication apparatus according to the present disclosure includes a control section that controls a first wireless communication section that performs, using a first link, first communication with another communication apparatus that is a communication partner, and a second wireless communication section that performs, using a second link, first communication with the other communication apparatus, the control section controlling the second wireless communication section such that the second wireless communication section transmits a second signal that includes information regarding an exclusive communication period of time on a specified channel of the first link for the other communication apparatus.

## Description

### Technical Field

The present disclosure relates to a communication apparatus and a communication method.

### Background Art

Generally, a large bandwidth is used in order to perform high-speed wireless communication. For example, a contiguous 160-MHz or 320-MHz band can be used for IEEE 802.11. On the other hand, when other communication is detected in a specific 20-MHz band (a primary channel) included in the band described above, there is a need to prevent communication performed in the entire band including another band (a secondary channel). In this case, there is a reduction in spectral efficiency. Thus, an approach called a secondary channel access that is communication performed on a secondary channel on which communication has not been detected is under discussion. As a technology related to such an approach, there is a technology disclosed in the disclosed contribution with respect to IEEE 802.11 (23/00034r1).

### Citation List

### Non-Patent Literature

Non-Patent Literature 1: IEEE 802.11-23/00034r1

### Disclosure of Invention

### Technical Problem

When a secondary channel access is performed, it is necessary that communication apparatuses recognize in common channel information regarding a channel on which the secondary channel access is performed. In addition to this, there is a need not to block communication performed by terminals with other basic service sets (BSSs) on the channel. A communication apparatus with a certain BSS can prevent transmission of a signal on a secondary channel (physically busy) in the case in which a signal is transmitted by a terminal with another BSS when the communication apparatus performs a secondary channel access and in the case in which power of the transmitted signal is detected.

However, in the case of the technology disclosed in the disclosed contribution with respect to IEEE 802.11 (23/00034r1), it is difficult for the communication apparatus to confirm the presence of the terminal with the other BSS when a signal from the terminal with the other BSS or power of the signal is not detected. Thus, it is difficult for the communication apparatus to set a network allocation vector (NAV) properly even when there is a need to set an NAV for, for example, the terminal with the other BSS (virtually busy) with acquisition of a transmission opportunity (TXOP) that is a right to transmission. This results in preventing communication performed by the terminal with the other BSS.

Thus, in view of the issues described above, the present disclosure provides a communication apparatus and a communication method that make it possible to check NAV settings on other channels when a secondary channel access is performed.

### Solution to Problem

A communication apparatus according to the present disclosure includes a control section that controls a first wireless communication section that performs, using a first link, first communication with another communication apparatus that is a communication partner, and a second wireless communication section that performs, using a second link, first communication with the other communication apparatus, the control section controlling the second wireless communication section such that the second wireless communication section transmits a second signal that includes information regarding an exclusive communication period of time on a specified channel of the first link for the other communication apparatus.

### Brief Description of Drawings

[Fig. 1] Fig. 1 illustrates an example of an overall configuration of a wireless communication system according to a first embodiment.
[Fig. 2] Fig. 2 is a block diagram of a communication apparatus that includes a communication section according to the first embodiment.
[Fig. 3] Fig. 3 is a sequence diagram illustrating examples of operations performed by AP MLDs 1 and 3 according to the first embodiment.
[Fig. 4] Fig. 4 is an example of a flowchart used when a right to transmission is acquired by the AP MLD 1 according to the first embodiment.
[Fig. 5] Fig. 5 illustrates an example of a frame format of a first signal according to the first embodiment.
[Fig. 6] Fig. 6 illustrates an example of a frame format of a second signal according to the first embodiment.
[Fig. 7] Fig. 7 illustrates other examples of the frame formats of the first signal and second signal according to the first embodiment.
[Fig. 8] Fig. 8 illustrates yet another example of the frame format of the first signal according to the first embodiment.
[Fig. 9] Fig. 9 illustrates yet another example of the frame format of the second signal according to the first embodiment.
[Fig. 10] Fig. 10 is a sequence diagram illustrating examples of operations performed by the AP MLDs 1 and 3 according to a second embodiment.
[Fig. 11] Fig. 11 is a block diagram of an example of a configuration of hardware of a computer that performs a series of processes according to the first or second embodiment using a program.
[Fig. 12] Fig. 12 is a block diagram of an example of a schematic configuration of a smartphone to which the first or second embodiment is applied.
[Fig. 13] Fig. 13 is a block diagram of an example of a schematic configuration of an in-vehicle apparatus to which the first or second embodiment is applied.
[Fig. 14] Fig. 14 is a block diagram of an example of a schematic configuration of a wireless AP to which the first or second embodiment is applied.

### Mode(s) for Carrying Out the Invention

Embodiments of the present disclosure will now be described in detail below with reference to the drawings. Note that, in the specification and the drawings, structural elements that have substantially the same functional configuration are denoted by the same reference numeral to omit a description thereof as appropriate. Illustrations in the figures are simplified ones, and, in addition to illustrated structural elements, a structural element necessary for implementation is provided properly. Further, when terms such as "first" and "second" are used in the specification or in the claims, those do not indicate any orders or any degrees of importance but are used in order to distinguish a certain structural element from another structural element, unless otherwise specified.

### (First Embodiment)

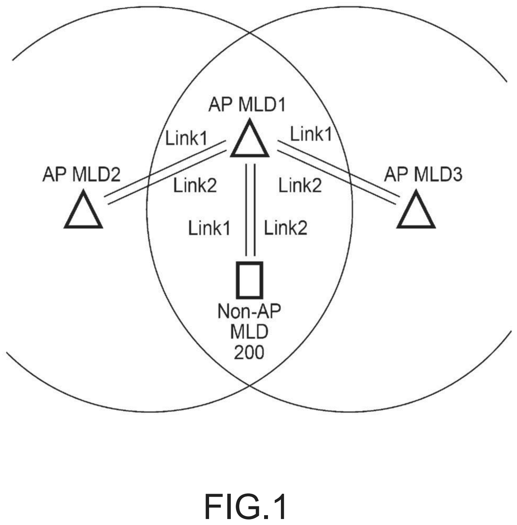

Fig. 1 illustrates an example of an overall configuration of a wireless communication system according to a first embodiment.

The wireless communication system illustrated in Fig. 1 includes AP multi-link devices (MLDs) 1, 2, and 3, and a non-AP MLD 200. Note that, in addition to operations described in the present embodiment, the AP the MLD 1,2,3 and the non-AP MLD 200 may also operate as a base station and a terminal for a wireless LAN in conformity with the IEEE 802.11 standards such as IEEE 802.11a/b/g/n/ac/ax/be/bn. For example, the AP MLD 1,2,3 and the non-AP MLD 200 may operate using carrier-sense multiple access with collision avoidance (CSMA/CA) as a basic access approach, and the AP MLDs 1, 2, and 3 may each transmit a beacon signal at regular time intervals (periodically).

The AP MLD 1 is wirelessly connected to each of the AP MLDs 2 and 3. The non-AP MLD 200 is wirelessly connected to the AP MLD 1. Being connected wirelessly refers to a state in which parameters necessary to perform communication have been exchanged in advance using, for example, an association process. The AP MLD 1 is connected to the AP MLD 2 using a link 1 corresponding to a first link and a link 2 corresponding to a second link. Further, the AP MLD 1 is connected to the AP MLD 3 using a link 1 corresponding to a first link and a link 2 corresponding to a second link. Furthermore, the AP MLD 1 is connected to the non-AP MLD 200 using a link 1 corresponding to a first link and a link 2 corresponding to a second link. The link refers to a wireless transmission line that enables data transmission between two communication apparatuses, and may be referred to as a wireless link.

Note that the link 1 between the AP MLDs 1 and 2, the link 1 between the AP MLDs 1 and 3, and the link 1 between the AP MLD 1 and the non-AP MLD 200 have the same frequency or the same frequency band. The link 2 between the AP MLDs 1 and 2, the link 2 between the AP MLDs 1 and 3, and the link 2 between the AP MLD 1 and the non-AP MLD 200 have the same frequency or the same frequency band.

It is assumed that the links 1 and 2 have different frequencies or different frequency bands, although the case in which the links 1 and 2 have the same frequency or the same frequency band is also not excluded. Further, each of the number of links used to connect the AP MLDs 1 and 2, the number of links used to connect the AP MLDs 1 and 3, and the number of links used to connect the AP MLD 1 and the non-AP MLD 200 is two. However, each of the numbers may be three or more.

### [Example of Configuration of AP MLD 1]

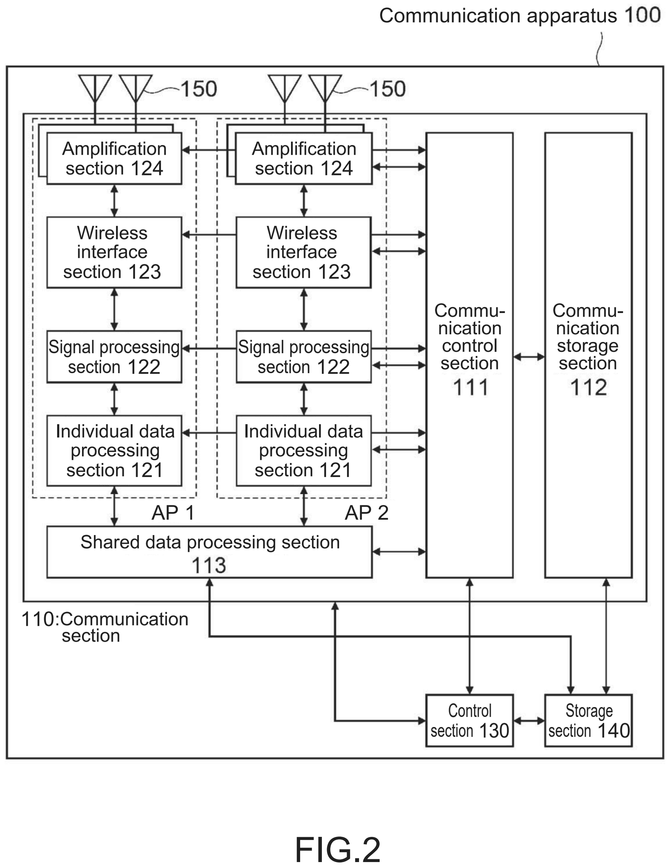

Fig. 2 is a block diagram of a communication apparatus that includes a communication section according to the first embodiment.

A communication apparatus (here, the AP MLD 1 is taken as an example) 100 primarily includes a communication section 110, a control section 130, and a storage section 140. The communication section 110 includes a communication control section 111, a communication storage section 112, a shared data processing section 113, an AP 1, and an AP 2. The communication section 110 may be implemented by at least one LSI.

In the present embodiment, the AP MLD and the non-AP MLD are described below as examples of the communication apparatuses. However, a chip that is implemented by at least one LSI and that includes the communication section 110 may also be called a communication apparatus.

The APs 1 and 2 each include an individual data processing section 121, a signal processing section 122, a wireless interface section 123, at least one amplification section 124, and at least one antenna 150. In other words, a set of the individual data processing section 121, the signal processing section 122, the wireless interface section 123, the amplification section 124, and the antenna 150 is included in each AP, and at least two APs are structural elements of the communication apparatus 100.

The AP 1 performs processing related to the link 1 in the AP MLD 1, and the AP 2 performs processing related to the link 2 in the AP MLD 1. In particular, a set of the individual data processing section 121 and signal processing section 122 being included in each AP is also referred to as an AP entity. Each AP performs communication using a corresponding one of the links.

The AP 1 or the AP entity of the AP 1 corresponds to a first wireless communication section that performs link 1-related communication (first communication) with a communication partner, and the AP 2 corresponds to a second wireless communication section that performs link 2-related communication (second communication) with the communication partner.

The communication control section 111 controls operations performed by the respective structural elements and information transmission performed between the structural elements. Further, the communication control section 111 performs control to deliver, to the shared data processing section 113 and the APs 1 and 2, control information and management information that are to be reported to another wireless communication apparatus 100. The communication control section 111 is also referred to as an MLD management entity.

The communication storage section 112 retains information used by the communication control section 111. The communication storage section 112 retains data to be transmitted to the AP MLDs 2 and 3 and the non-AP MLD 200 and data received from the AP MLDs 2 and 3 and the non-AP MLD 200.

At the time of transmission, the shared data processing section 113 performs sequence management of the data retained in the communication storage section 112 as well as the control information and management information that are received from the communication control section 111, and performs, for example, encryption processing. The shared data processing section 113 assigns the processed data to the respective individual data processing sections 121. At the time of reception, the shared data processing section 113 performs decryption processing and reorder processing on the data. The shared data processing section 113 is also referred to as an AP MLD entity.

At the time of transmission, each individual data processing section 121 performs channel access operation on the basis of carrier sensing, generates a data unit by adding a media access control (MAC) header and an error-detection code to data to be transmitted, and performs processing of coupling a plurality of data units. At the time of reception, each individual data processing section 121 performs processing of decoupling a MAC header of the received data unit, performs analysis and error detection, and performs an operation of requesting retransmission.

Note that the operations performed by the shared data processing section 113 and each individual data processing section 121 are not limited to the operations described above, and, for example, one of the shared data processing section 113 and the individual data processing section 121 may perform an operation performed by another of the shared data processing section 113 and the individual data processing section 121. The shared data processing section 113 is also referred to as an upper MAC, a higher MAC, or an MLD entity, and the individual data processing section 121 is also referred to as a lower MAC.

At the time of transmission, each signal processing section 122 performs, for example, encoding, interleaving, and modulation on a data unit, and adds a physical header to generate a symbol stream. At this point, each signal processing section 122 may perform space separation processing for multi-input multi-output (MIMO). Note that, instead of performing the space separation processing, each signal processing section 122 may apply any amount of delay (hereinafter referred to as a cyclic shift delay (CSD)) for each antenna 150. At the time of reception, each signal processing section 122 analyzes the physical header, and performs, for example, demodulation, deinterleaving, and decoding on the symbol stream to generate the data unit. Further, each signal processing section 122 estimates complex channel characteristics and performs space separation processing as necessary.

At the time of transmission, each wireless interface section 123 performs digital-to-analog signal conversion, filtering, up-conversion, and phase control on a symbol stream, and generates a transmission signal. At the time of reception, the wireless interface section 123 performs down-conversion, filtering, and analog-to-digital signal conversion on a reception signal, and generates the symbol stream.

The amplification section 124 of each AP amplifies a signal input through the wireless interface section 123 or the antenna 150. A portion of the amplification section 124 may be a structural element external to the communication section 110. Further, a portion of the amplification section 124 may be included in the wireless interface section 123.

The control section 130 controls the communication section 110 and the communication control section 111. Further, on behalf of the communication control section 111, the control section 130 may perform a portion of operations performed by the communication control section 111. Furthermore, the communication control section 111 and the control section 130 may be formed into a single block. For example, a control section according to the present disclosure corresponds to the communication control section 111. Further, for example, when the communication control section 111 and the control section 130 are formed into a single block, the control section corresponds to this block.

The storage section 140 retains information used by the control section 130 and the communication section 110. Further, on behalf of the communication storage section 112, the storage section 140 may perform a portion of operations performed by the communication storage section 112. The storage section 140 and the communication storage section 112 may be formed into a single block.

Further, each AP may include a storage section. Note that, in the present embodiment, frequencies (or frequency bands) of links used by the APs are different, but the case in which the APs use links having the same frequency (or the same frequency band) is also not excluded.

A plurality of sets of the individual data processing section 121 and the signal processing section 122 may be connected to one wireless interface section 123. In other words, one wireless interface section 123 may be shared to be used by a plurality of APs.

Further, a plurality of sets of the wireless interface section 123, the amplification section 124, and the antenna 150 may be connected to one signal processing section 122. In other words, the signal processing section 122 may be shared to be used by a plurality of APs. In this case, one individual data processing section 121 or a plurality of individual data processing sections 121 may be provided.

Descriptions of block diagrams of the non-AP MLD 200, the AP MLD 2, and the AP MLD 3 are omitted since the non-AP MLD 200, the AP MLD 2, and the AP MLD 3 each have a configuration similar to the configuration of the AP MLD 1.

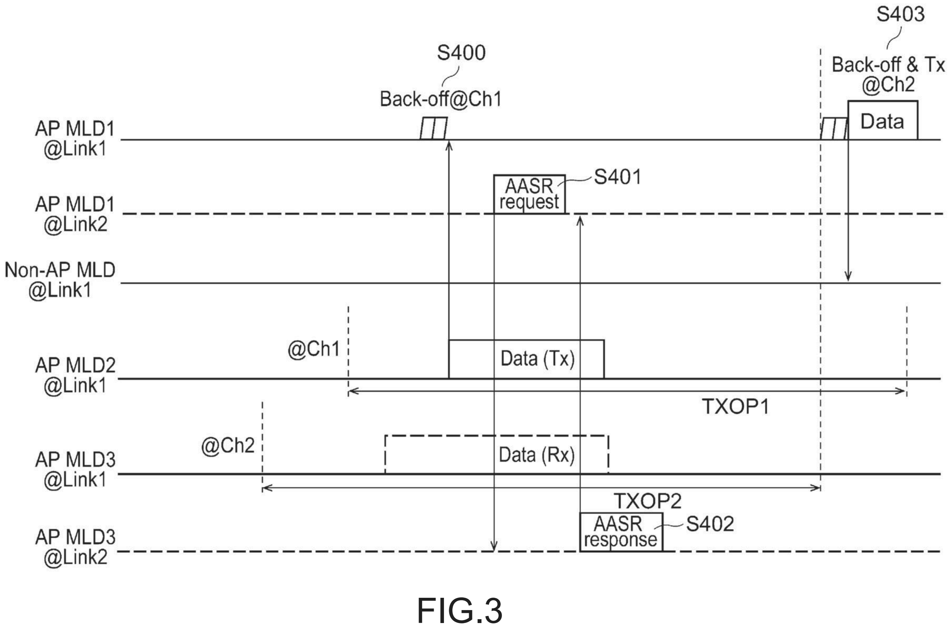

Fig. 3 is a sequence diagram illustrating examples of operations performed by the AP MLDs 1 and 3 according to the first embodiment.

An example in which the AP MLD 1 makes a request to the AP MLD 3 cooperating with the AP MLD 1 at the link 2 for TXOP/NAV information regarding a secondary channel when the AP MLD 1 performs a secondary channel access together with the non-AP MLD 200 at the link 1 using Ch2, which corresponds to the secondary channel, is described using the sequence diagram. Further, an example in which Ch1, which corresponds to a primary channel at the link 1 for the AP MLD 1, is physically busy due to the AP MLD 2 and TXOP2 is set for Ch2 by the AP MLD 3 as an exclusive communication period of time, is described. Furthermore, when the AP MLD 3 receives the request for the TXOP/NAV information, the AP MLD 3 reports the TXOP/NAV information regarding Ch2 to the AP MLD 1 as a response using the link 2. This results in the AP MLD 1 updating the TXOP/NAV information regarding Ch2. Thereafter, the AP MLD 1 acquires a right to transmission on Ch2.

A secondary channel set for a request-source AP MLD is an example of a specified channel, and a primary channel set for the request-source AP MLD is an example of a channel that is different from the specified channel. For example, the specified channel and the channel different from the specified channel may be the primary channel and the secondary channel, respectively, or do not necessarily have to be the secondary channel and the primary channel, respectively. Various channels may be adopted.

A sequence for the AP MLDs 1 and 3 at the link 1 is indicated by @Link1 and is indicated along a temporal axis indicated using a solid line. Likewise, a sequence for the AP MLDs 1 and 3 at the link 2 is indicated by @Link2 and is indicated along a temporal axis indicated using a dashed line. Frames transmitted and received between the AP MLDs 1 and 3 may be spaced with appropriate frame spacing according to the IEEE 802.11 standards. Examples of the type of the frame spacing include a short interframe space (SIFS), a distributed coordination function interframe space (DIFS), an arbitration interframe space (AIFS), a point coordination function interframe space (PIFS), an extended interframe space (EIFS), and a reduced interframe space (RIFS).

Before the sequence is started, the AP MLD 1 and the non-AP MLD 200 may perform a capability check, where the capability check is performed to check whether a function according to the present embodiment is supported. Further, capability checks may be respectively performed between the AP MLDs 1 and 2 and between the AP MLDs 1 and 3, where each capability check is performed to check that a cooperative operation is supported. When the capability check is performed, pieces of information regarding a primary channel and a secondary channel for the respective links at which the AP MLDs 1 to 3 operate may be exchanged between the AP MLDs 1 to 3. Further, with respect to the pieces of exchanged information, each of the AP MLDs 1 to 3 may determine a priority list of channels used when a secondary channel access is performed. The priority list may be a list in which, for example, channels used to perform a secondary channel access are put in order of priority, and may be stored in the communication storage section 112 or the storage section 140.

First, in Step S400, the AP MLD 1 starts a procedure of acquiring a right to transmission, in order to perform transmission using the link 1. The procedure of acquiring a right to transmission may be, for example, a back-off procedure. In the back-off procedure, the AP MLD 1 waits a random period of time and confirms that there is not any communication performed by the AP MLD 2 or 3. Thereafter, the AP MLD 1 can acquire a right to transmission on a channel on which the back-off procedure has been performed. The back-off procedure is performed by the first wireless communication section under the control of the communication control section 111. In this example, when the AP MLD 1 confirms, after waiting a random period of time, that there is not any communication performed by the AP MLD 2 or 3, the AP MLD 1 can acquire a right to transmission on a primary channel set for the link 1 (in this example, Ch1 is set to be the primary channel).

Further, in Step S400, when the AP MLD 1 has detected that there is communication performed by the AP MLD 2 or 3 using Ch1 during waiting the random period of time, the AP MLD 1 temporarily stops waiting the random period of time, and determines that the secondary channel access is to be performed. Further, the AP MLD 1 determines that confirmation of whether communication can be performed on a secondary channel set for the link 1 (in this example, Ch2 is set to be the secondary channel) is to be performed, in order to perform a secondary channel access.

In this example, the AP MLD 1 detects a signal or power of Data(Tx) from the AP MLD 2 to detect communication performed on Ch1, and determines confirmation of whether a secondary channel access can be performed using Ch2 is to be performed. Further, the AP MLD 1 may acquire information regarding TXOP1, which represents an exclusive communication period of time that is set for Ch1 for the AP MLD 2 when communication performed by the AP MLD 2 is detected. Note that the detection may be performed by determining whether a value of the signal or power is greater than a threshold used for signal detection or a threshold used for power detection.

In Step S401, after determining that confirmation of whether communication can be performed on a secondary channel is to be performed, the AP MLD confirms whether an exclusive communication period of time related to a secondary channel has been set for a corporation-target AP MLD.

In this example, the AP MLD 1 confirms with the AP MLD 3, which is a cooperation target, whether TXOP2, which represents an exclusive communication period of time for Ch2, which represents a secondary channel, has been set. This confirmation is performed by the AP MLD 1 making a request for TXOP/NAV information regarding the secondary channel using the link 2. Further, the request for the TXOP/NAV information is made by the second wireless communication section under the control of the communication control section 111. In this example, the request for TXOP/NAV information is referred to as an AP assisted secondary medium synchronization recovery (AASR) request. Further, the AASR request is also referred to as a first signal for description. As described above, the first signal is transmitted using a second link different from a first link including a secondary channel. Note that the case in which the second link and the first link use different frequency bands is described in this example, and the AP MLD 1 may transmit the first signal using any channel without considering interference with a channel of the first link.

The first signal includes, for example, data indicating that information regarding an exclusive communication period of time for a specified channel is requested, and data of a link including the specified channel for which the information regarding the exclusive communication period of time is requested. Formats of these pieces of data will be described later.

In Step S402, the AP MLD 3 receives the first signal using the link 2. As a response, the AP MLD 3 reports to the AP MLD 1 whether TXOP2 has been set for Ch2 of the link 1 for the AP MLD 1. In this example, a response to the AASR request is referred to as an AASR response. The AASR response is also referred to as a second signal below for description. Further, the AP MLD 3 reports about the second signal using the link 2. Furthermore, reception of the first signal and transmission of the second are performed by the second wireless communication section under the control of the communication control section 111. As described above, an AP MLD that receives the first signal reports to a request-source AP MLD about whether an exclusive communication period of time for a secondary channel for the request-source AP MLD has been set for the request-source AP MLD. Note that the case in which the second link and the first link use different frequency bands is described in this example, and the AP MLD 3 may transmit the second signal using any channel without considering interference with a channel of the first link.

The second signal includes, for example, data indicating that information regarding an exclusive communication period of time for a specified channel is requested, and data of the exclusive communication period of time. Formats of these pieces of data will be described later.

In Step S403, the AP MLD 1 receives the second signal using the link 2, and determines that communication on Ch2 is to be performed. The reception of the second signal is performed by the second wireless communication section under the control of the communication control section 111. In this example, TXOP2 is set for the link 1 for the AP MLD 3. Thus, the AP MLD 1 acquires a right to transmission on Ch2 after the period of time ends, and performs a secondary channel access. Further, when TXOP2 is not set for Ch2, the AP MLD 1 acquires a right to transmission regardless of TXOP2 after the second signal is received. For example, it is conceivable that, when TXOP2 is not set, the AP MLD 1 could perform a procedure of acquiring a right to transmission immediately. The right to transmission is acquired using, for example, a back-off procedure. The procedure of acquiring a right to transmission is performed by the first wireless communication section under the control of the communication control section 111.

Further, when a period of time until TXOP2 is terminated is shorter than a period of time until TXOP1 is terminated, that is, when an exclusive communication period of time set for Ch2 is shorter than an exclusive communication period of time set for Ch1, the AP MLD 1 performs a procedure of acquiring, on Ch2, a right to transmission after the termination of TXOP2. Furthermore, when the period of time until TXOP2 is terminated is longer than the period of time until TXOP1 is terminated, that is, when the exclusive communication period of time set for Ch2 is longer than the exclusive communication period of time set for Ch1, the AP MLD 1 may perform the procedure of acquiring, on Ch1, a right to transmission after the termination of TXOP1 without performing a secondary channel access on Ch2.

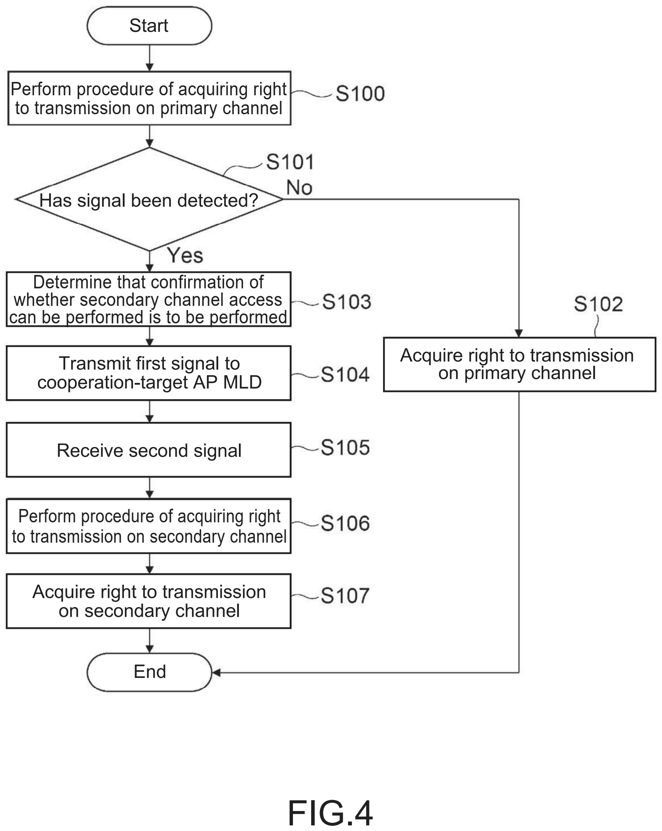

Fig. 4 is an example of a flowchart used when a right to transmission is acquired by the AP MLD 1 according to the first embodiment.

How the AP MLD 1 acquires a right to transmission in the sequence illustrated in Fig. 3 is described in this example. Further, the case in which Ch1, which is a primary channel for the AP MLD 1, is physically busy and TXOP2 is set for Ch2, which is a secondary channel for the AP MLD 1, is described in this example.

In Step S100, first, the AP MLD 1 starts, on Ch1, a procedure of acquiring a right to transmission. In this case, the communication control section 111 performs a back-off procedure using the first wireless communication section. In Step S101, using the first wireless communication section, the communication control section 111 waits a random period of time and confirms that there is not any communication performed by the AP MLD 2 or 3. Specifically, when the first wireless communication section does not detect the communication performed by the AP MLD 2 or 3, this results in the communication control section 111 confirming that there is no communication.

When it has been determined, in Step S101, that there is not any communication performed by the AP MLD 2 or 3, the communication control section 111 acquires, on Ch1, a right to transmission in Step S102, and the processing is terminated. When communication performed by the AP MLD 2 or 3, that is, for example, communication performed by the AP MLD 2 using Ch1 in the example illustrated in Fig. 3 has been detected in Step S101, the communication control section 111 determines, in Step S103, that confirmation of whether a secondary channel access can be performed on Ch2 is to be performed.

In Step S104, the communication control section 111 transmits a first signal to a cooperation-target AP MLD, that is, for example, the AP MLD 3 in the example illustrated in Fig. 3. The communication control section 111 transmits the first signal to the AP MLD 3 at the second link using the second wireless communication section. In Step S105, the second wireless communication section of the AP MLD 1 receives a second signal. The communication control section 111 of the AP MLD 3 transmits this second signal using the second wireless communication section, although this is not described in the flowchart.

In Step S106, the communication control section 111 of the AP MLD 1 starts, on Ch2, a procedure of acquiring a right to transmission. The communication control section 111 performs a back-off procedure using the first wireless communication section. In Step S107, the communication control section 111 acquires, on Ch2, a right to transmission, and the processing is terminated.

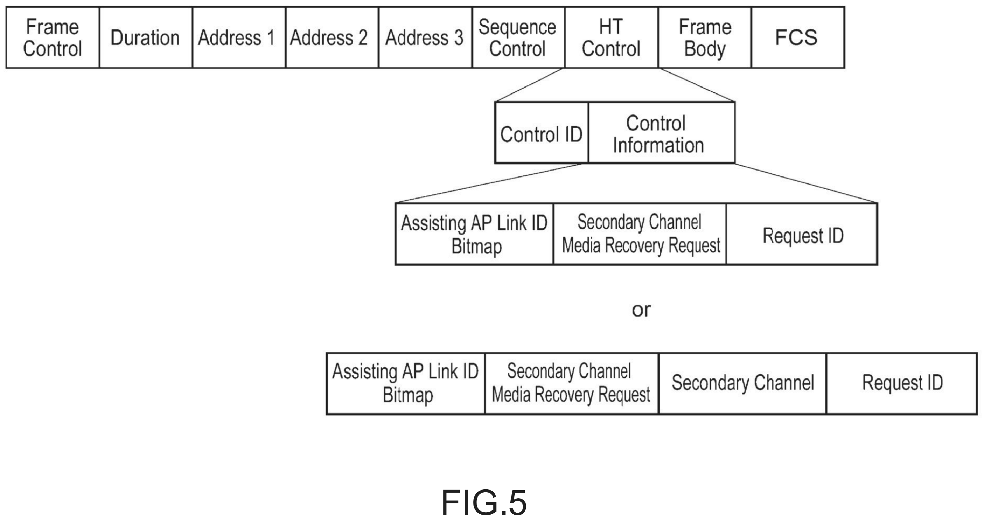

Fig. 5 illustrates an example of a frame format of a first signal according to the first embodiment.

The frame illustrated in Fig. 5 includes, as a plurality of fields, Frame Control, Duration, Address 1, Address 2, Address 3, Sequence Control, HT Control, Frame Body, and FCS.

Frame Control includes information regarding setting of the frame, Duration includes information regarding a length of the frame, Address 1 to Address 3 each include information regarding an address of a transmission source or a transmission destination, Sequence Control includes information regarding a sequence number of the frame, Frame Body includes a data body, and FCS includes information regarding error detection. In the present embodiment, Frame Body may be empty (QoS Null). HT Control includes A-Control, which corresponds to a pair of Control ID and Control Information. Further, A-Control may include a plurality of pairs of Control ID and Control Information.

Control ID includes information regarding a type of a stored Control field. Control Information includes Assisting AP Link ID Bitmap, Secondary Channel Media Recovery Request, and Request ID. Further, Control Information may include Secondary Channel.

Assisting AP Link ID Bitmap includes data of a link including a secondary channel for which TXOP/NAV information is requested. Secondary Channel Media Recovery Request includes data indicating that TXOP/NAV information regarding a secondary channel is requested. Request ID includes an identifier that is data used to associate a first signal and a second signal and that indicates it is the first signal.

Secondary Channel includes information regarding a band of a secondary channel used to perform communication. In addition to information such as a predetermined identifier, a center frequency, and a bandwidth, Secondary Channel includes, for example, one of an operating class, a channel set, and a channel center frequency index that are defined by Global operating classes of IEEE 802.11. In addition to a method including exchanging, by AP MLDs, pieces of information regarding a primary channel and a secondary channel by performing a capability check, an AP MLD may include, in an AASR request, information regarding a secondary channel that is necessary for this field and may transmit the AASR requests successively.

Note that these fields may be provided on the basis of AAR Control defined by IEEE 802.11, and in particular, the fields may be provided by assigning Secondary Channel Media Recovery Request, Request ID, and Secondary Channel to Reserve of AAR Control.

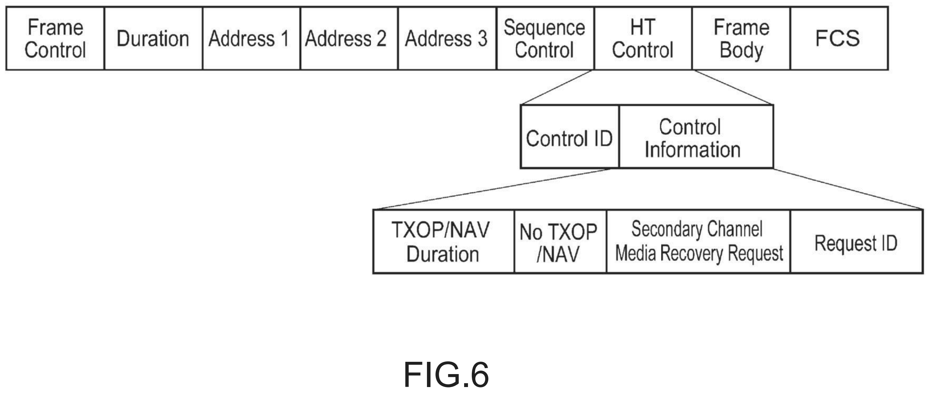

Fig. 6 illustrates an example of a frame format of a second signal according to the first embodiment.

As in the case of the frame illustrated in Fig. 5, the frame illustrated in Fig. 6 includes Frame Control, Duration, Address 1, Address 2, Address 3, Sequence Control, HT Control, Frame Body, and FCS. Thus, HT Control, which is different from HT Control in Fig. 5, is described in the example illustrated in Fig. 5.

HT Control includes A-Control, which corresponds to a pair of Control ID and Control Information. Further, A-Control may include a plurality of pairs of Control ID and Control Information.

Control ID includes information regarding a type of a stored Control field. Control Information includes TXOP/NAV Duration, No TXOP/NAV, Reserve, Secondary Channel Media Recovery Response, and Request ID.

TXOP/NAV Duration includes data of a period of time of TXOP/NAV set for a secondary channel. Information regarding the period of time of TXOP/NAV may be a remaining period of time until a finish timing of set TXOP/NAV, the remaining period of time being calculated, with an arrival timing of a start or an end of the frame being used as a start point. No TXOP/NAV, Reserve includes information indicating that TXOP/NAV is not set for a secondary channel. Secondary Channel Media Recovery Response includes data indicating that TXOP/NAV information regarding a secondary channel is reported. Request ID includes an identifier that is data used to associate a first signal and a second signal and that indicates it is the second signal.

Further, each AP MLD may regularly transmit a second signal to another AP MLD without transmitting the second signal as a response to a first signal. This makes it possible to report information regarding a secondary channel even when no request for a second signal is made by another AP MLD.

Further, a first signal and a second signal may be transmitted concurrently with regular data communication. It is conceivable that, when, for example, transmission is performed after various pieces of data are stored in Frame Body, the transmission could be performed after a first signal or a second signal is included in the HT Control field.

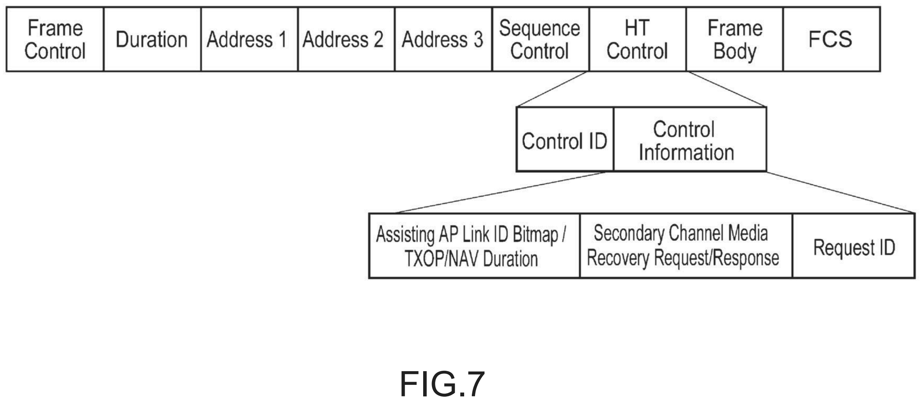

Fig. 7 illustrates other examples of the frame formats of the first signal and second signal according to the first embodiment.

In Fig. 7, the first signal and the second signal have a shared field structure. When such a shared filed structure is adopted, the AP MLD can determine, referring to values of Secondary Channel Media Recovery Request/Response, whether a held signal is a first signal or a second signal.

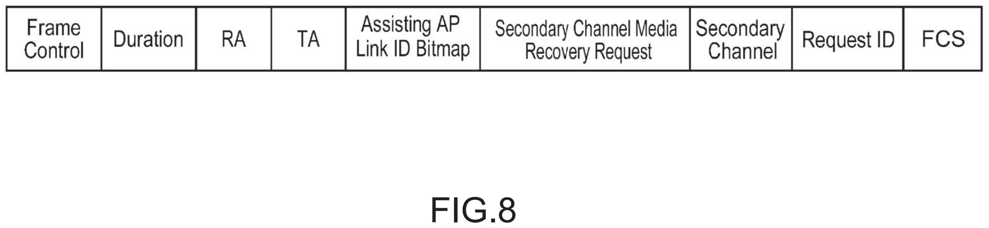

Fig. 8 illustrates yet another example of the frame format of the first signal according to the first embodiment.

The example in which each field of the first signal is provided on the basis of AAR Control defined by IEEE 802.11, has been described in the example above. In this example, the first signal is provided by another frame format.

The frame illustrated in Fig. 8 includes, as a plurality of fields, Frame Control, Duration, RA, TA, Assisting AP Link ID Bitmap, Secondary Channel Media Recovery Request, Secondary Channel, Request ID, and FCS.

RA includes information regarding a transmission-destination address, and TA includes information regarding a transmission-source address. Frame Control, Duration, Assisting AP Link ID Bitmap, Secondary Channel Media Recovery Request, Secondary Channel, Request ID, and FCS are similar to those illustrated in Fig. 5. Thus, descriptions thereof are omitted.

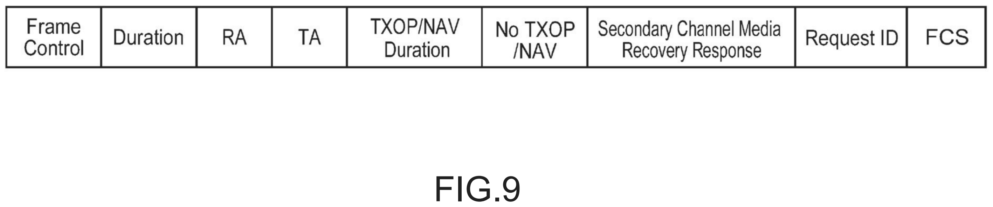

Fig. 9 illustrates yet another example of the frame format of the second signal according to the first embodiment.

The example in which each field of the second signal is provided on the basis of AAR Control defined by IEEE 802.11, has been described in the example above. In this example, the second signal is provided by another frame format.

The frame illustrated in Fig. 9 includes, as a plurality of fields, Frame Control, Duration, RA, TA, TXOP/NAV Duration, No TXOP/NAV, Secondary Channel Media Recovery Response, Request ID, and FCS.

RA includes information regarding a transmission-destination address, and TA includes information regarding a transmission-source address. Frame Control, Duration, TXOP/NAV Duration, No TXOP/NAV, Secondary Channel Media Recovery Response, Request ID, and FCS are similar to those illustrated in Fig. 6. Thus, descriptions thereof are omitted.

The present embodiment enables an AP MLD to acquire, upon performing a secondary channel access, information regarding a TXOP/NAV period of time, on a secondary channel, that is set for, for example, another BSS. Further, the acquisition of the TXOP/NAV period of time on a secondary channel enables the AP MLD to prevent, upon performing a secondary channel access, communication performed by another BSS terminal from being blocked.

Further, according to the present embodiment, an AP MLD transmits and receives a first signal and a second signal using a link that is different from a link including a channel on which a secondary channel access is performed. This enables the AP MLD performing a secondary channel access to quickly acquire a TXOP/NAV period of time without waiting until other communication is terminated.

### (Second Embodiment)

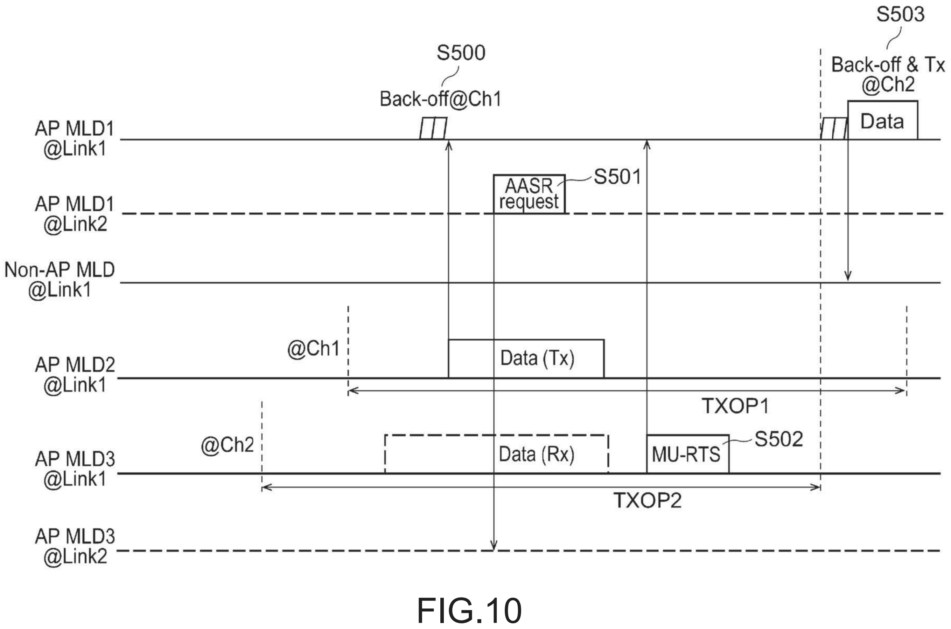

Fig. 10 is a sequence diagram illustrating examples of operations performed by the AP MLDs 1 and 3 according to a second embodiment.

The overall configuration of the wireless communication system is similar to that illustrated in Fig. 1. Thus, a description thereof is omitted.

An example in which the AP MLD 1 makes a request to the AP MLD 3 cooperating with the AP MLD 1 at the link 2 for TXOP/NAV information regarding a secondary channel when the AP MLD 1 performs a secondary channel access together with the non-AP MLD 200 at the link 1 using Ch2, is described in the sequence diagram. Further, an example in which Ch1 is physically busy due to the AP MLD 2 and TXOP2 is set for Ch2, is described. Furthermore, when the AP MLD 3 receives the request for the TXOP/NAV information, the AP MLD 3 transmits, using the link 1 and as a response, a multi-user RTS (MU-RTS) defined by IEEE 802.11 to report the TXOP/NAV information regarding Ch2 to the AP MLD 1. This results in the AP MLD 1 updating the TXOP/NAV information regarding Ch2. The second embodiment is different from the first embodiment in that the cooperation-target AP MLD 3 transmits the MU-RTS as a response to a first signal using the first link upon reporting an exclusive communication period of time.

Before the sequence is started, the AP MLD 1 and the non-AP MLD 200 may perform a capability check, where the capability check is performed to check whether a function according to the present embodiment is supported. Further, capability checks may be respectively performed between the AP MLDs 1 and 2 and between the AP MLDs 1 and 3, where each capability check is performed to check that a cooperative operation is supported. When the capability check is performed, pieces of information regarding a primary channel and a secondary channel for the respective links at which the AP MLDs 1 to 3 operate may be exchanged between the AP MLDs 1 to 3. Further, with respect to the pieces of exchanged information, each of the AP MLDs 1 to 3 may determine a priority list of channels used when a secondary channel access is performed. The priority list may be a list in which, for example, channels used to perform a secondary channel access are put in order of priority, or may be stored in, for example, the communication storage section 112.

First, in Step S500, the AP MLD 1 starts a procedure of acquiring a right to transmission, in order to perform transmission using the link 1. The procedure of acquiring a right to transmission may be, for example, a back-off procedure. For example, on a primary channel set for the link 1 (in this example, Ch1 is set to be the primary channel), the AP MLD 1 waits a random period of time and confirms that there is not any communication performed by the AP MLD 2 or 3. Thereafter, the AP MLD 1 may acquire a right to transmission. When the AP MLD 1 confirms, after waiting a random period of time, that there is not any communication performed by the AP MLD 2 or 3, the AP MLD 1 can acquire a right to transmission on the primary channel for the link 1.

Further, in Step S500, when the AP MLD 1 has detected that there is communication performed by the AP MLD 2 or 3 using Ch1 during waiting the random period of time, the AP MLD 1 temporarily stops waiting the random period of time, and determines that the secondary channel access is to be performed. Further, the AP MLD 1 determines that confirmation of whether communication can be performed on a secondary channel set for the link 1 (in this example, Ch2 is set to be the secondary channel) is to be performed, in order to perform a secondary channel access.

In this example, the AP MLD 1 detects a signal or power of Data(Tx) from the AP MLD 2 to detect communication performed on Ch1, and confirms whether a secondary channel access can be performed using Ch2. Further, the AP MLD 1 may acquire information regarding TXOP1, which represents an exclusive communication period of time for the AP MLD 2 when communication performed the AP MLD 2 is detected. Note that the detection may be performed by determining whether a value of the signal or power is greater than a threshold used for signal detection or a threshold used for power detection.

In Step S501, after determining that confirmation of whether communication can be performed on a secondary channel is to be performed, the AP MLD confirms whether an exclusive communication period of time related to a secondary channel has been set for a corporation-target AP MLD.

In this example, the AP MLD 1 transmits, using the link 2, a first signal related to a secondary channel to the AP MLD 3, which is a cooperation target, and confirms whether TXOP2, which represents an exclusive communication period of time for Ch2, which represents a secondary channel, has been set. The first signal is transmitted by the second wireless communication section under the control of the communication control section 111. The data format illustrated in, for example, Fig. 5, 7, or 8 can be used as a data format used when a first signal is transmitted.

In Step S502, the AP MLD 3 receives the first signal using the link 2. As a response, the AP MLD 3 reports to the AP MLD 1 about whether TXOP2 has been set for Ch2 of the link 1 for the AP MLD 1. In this example, the AP MLD 3 transmits an MU-RTS to the AP MLD 1 as the second signal through the link 1. The first signal is received by the second wireless communication section under the control of the communication control section 111. Further, the MU-RTS is transmitted by the first wireless communication section under the control of the communication control section 111. A request to send (RTS) may be transmitted instead of the MU-RTS. Note that, as a destination, the MU-RTS or RTS may be transmitted to another terminal that is not the AP MLD 1 or may be transmitted broadcast.

Further, when TXOP2 is not set for Ch2, the AP MLD 3 does not necessarily have to transmit a second signal. When, for example, a second signal is not received before time-out occurs, the AP MLD 1 may determine that TXOP2 is not set.

In Step S503, the AP MLD 1 receives the MU-RTS. The AP MLD 1 receives the second signal using the link 1, and determines that communication on Ch2 is to be performed. The reception of the second signal is performed by the first wireless communication section under the control of the communication control section 111. In this example, TXOP2 is set for the link 1 for the AP MLD 3. Thus, the AP MLD 1 acquires a right to transmission on Ch2 after the period of time ends, and performs a secondary channel access. Further, when TXOP2 is not set for Ch2, the AP MLD 1 acquires a right to transmission regardless of TXOP2 after the second signal is received. For example, it is conceivable that, when TXOP2 is not set, the AP MLD 1 could perform a procedure of acquiring a right to transmission immediately. The right to transmission is acquired using, for example, a back-off procedure. The procedure of acquiring a right to transmission is performed by the first wireless communication section under the control of the communication control section 111.

Further, when a period of time until TXOP2 is terminated is shorter than a period of time until TXOP1 is terminated, that is, when an exclusive communication period of time set for Ch2 is shorter than an exclusive communication period of time set for Ch1, the AP MLD 1 may perform a procedure of acquiring, on Ch2, a right to transmission after the termination of TXOP2. When the period of time until TXOP2 is terminated is longer than the period of time until TXOP1 is terminated, that is, when the exclusive communication period of time set for Ch2 is longer than the exclusive communication period of time set for Ch1, the AP MLD 1 may perform the procedure of acquiring, on Ch1, a right to transmission after the termination of TXOP1 without performing a secondary channel access on Ch2.

According to the present embodiment, an AP MLD transmits an MU-RTS or an RTS as a response to a first signal. Accordingly, an AP MLD transmitting the first signal receives the MU-RTS or the RTS. This enables the AP MLD transmitting the first signal to acquire, upon performing a secondary channel access, information regarding a TXOP/NAV period of time set for, for example, another BSS. Further, the acquisition of the TXOP/NAV period of time enables the AP MLD to prevent, upon performing a secondary channel access, communication performed by another BSS terminal from being blocked.

Further, the present embodiment makes it possible to reuse assets of existing protocols defined by IEEE 802.11, since an AP MLD uses an MU-RTS or an RTS as a second signal. This makes it possible to reduce a change in existing specifications, and thus to prevent communication performed between communication apparatuses 100 from being adversely affected.

### <Example of Configuration of Computer>

The series of processes described above can be performed using hardware or software. When the series of processes is performed using software, a program included in the software is installed from a program recording medium on, for example, a computer incorporated into dedicated hardware or a general-purpose personal computer.

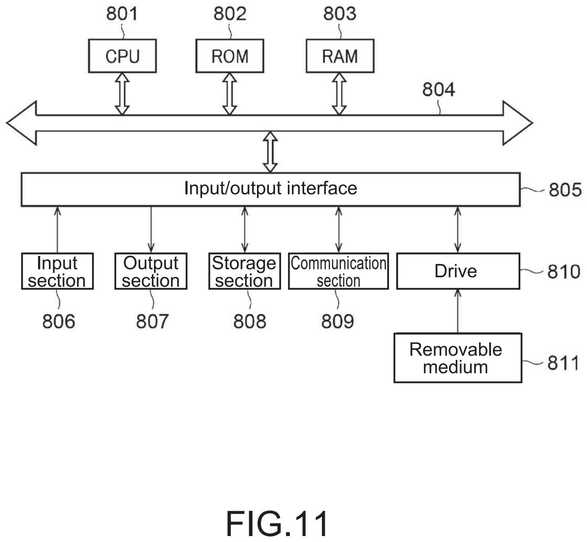

Fig. 11 is a block diagram of an example of a configuration of hardware of a computer that performs the series of processes described above using a program.

A central processing unit (CPU) 801, a read only memory (ROM) 802, and a random access memory (RAM) 803 are connected to each other through a bus 804.

Further, an input/output interface 805 is connected to the bus 804. An input section 806 that includes, for example, a keyboard and a mouse, and an output section 807 that includes, for example, a display and a speaker are connected to the input/output interface 805. Further, a storage section 808 that includes, for example, a hard disk and a nonvolatile memory, a communication section 809 that includes, for example, a network interface, and a drive 810 that drives a removable medium 811 are connected to the input/output interface 805.

In a computer having the configuration described above, the series of processes described above is performed by the CPU 801 loading, for example, a program stored in the storage section 808 into the RAM 803 and executing the program via the input/output interface 805 and the bus 804.

For example, the program executed by the CPU 801 is provided by being recorded in the removable medium 811 or provided via a wired or wireless transmission medium such as a local area network, the Internet, or digital broadcasting, and the provided program is installed on the storage section 808.

Note that the program executed by the computer may be a program in which processes are chronologically performed in the order of the description herein, or may be a program in which processes are performed in parallel or a process is performed at a necessary timing such as a timing of calling.

### <Application Examples>

The present technology can be applied to various products. For example, the communication apparatus 100 illustrated in Fig. 2 may be implemented as a mobile terminal such as a smartphone, a tablet personal computer (PC), a laptop, a portable game terminal, or a digital camera; a fixed terminal such as a television receiver, a projector, a printer, a digital scanner, or a network storage; or an in-vehicle terminal such as a car navigation apparatus. Furthermore, the communication apparatus 100 may be implemented as a machine-to-machine communication (M2M) terminal such as a smart meter, a vending machine, a remote monitoring apparatus, or a point-of-sale (POS) terminal. Moreover, the communication apparatus 100 may be a wireless communication module (such as an integrated circuit module formed using one die) included in a corresponding one of these terminals.

On the other hand, for example, the communication apparatus 100 may be implemented as a wireless LAN AP (a wireless base station) that includes or does not include a router function. Further, the communication apparatus 100 may be implemented as a mobile wireless LAN router. Furthermore, the communication apparatus 100 may be a wireless communication module (such as an integrated circuit module formed using one die) included in the apparatus.

### <Example of Configuration of Smartphone>

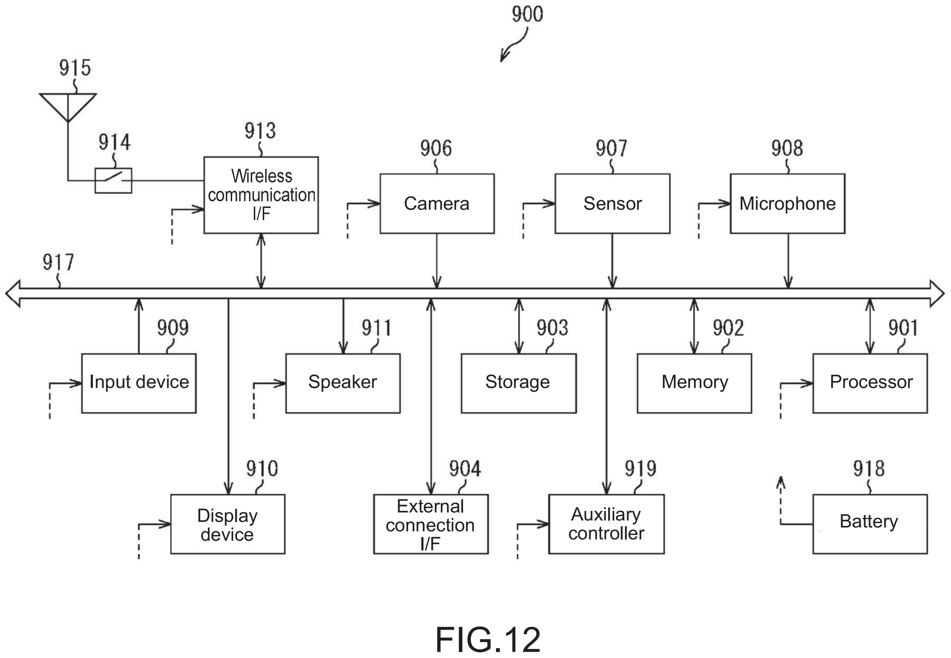

Fig. 12 is a block diagram of an example of a schematic configuration of a smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores therein a program that is executed by the processor 901, and data.

The storage 903 includes a storage medium such as a semiconductor memory or a hard disk.

The external connection interface 904 is an interface used to connect an external device such as a memory card or a Universal Serial Bus (USB) device to the smartphone 900.

The camera 906 includes, for example, a charge-coupled device (CCD) or complementary metal-oxide semiconductor (CMOS) imaging element, and generates a captured image.

The sensor 907 includes a sensor group such as a positioning sensor, a gyroscope, a geomagnetic sensor, and an acceleration sensor.

The microphone 908 converts, into an audio signal, sound input to the smartphone 900.

The input device 909 includes, for example, a touch sensor that detects touch on a screen of the display device 910, a keypad, a keyboard, a button, or a switch, and receives an operation performed by a user or information input by the user.

The display device 910 includes a screen such as a liquid crystal display (LCD) or an organic light-emitting diode (OLED) display, and displays thereon an output image output by the smartphone 900. Further, the display device 910 may be a projector that projects the output image onto a screen. The speaker 911 converts, into sound, an audio signal output by the smartphone 900. Furthermore, the processor 901 controls display performed on the display device 910, on the basis of information received through the first or second link and on the basis of an operation of the input device 909 that is performed by a user.

The wireless communication interface 913 supports at least one of wireless LAN standards such as IEEE 802.11a, 11b, 11g, 11ac, 11ad, 11ax, 11ay, and 11be, and performs wireless communication.

The wireless communication interface 913 communicates with other apparatuses through a wireless LAN AP in an infrastructure mode. Further, the wireless communication interface 913 directly communicates with other apparatuses in an ad hoc mode or a direct communication mode such as Wi-Fi Direct.

Note that, in Wi-Fi Direct, one of two terminals operates as an AP but communication is directly performed between the terminals, which is different from the ad hoc mode.

Typically, the wireless communication interface 913 includes, for example, a baseband processor, a radio frequency (RF) circuit, and a power amplifier. The wireless communication interface 913 may be a one-chip module in which a memory that stores therein a communication control program, a processor that executes the program, and related circuits are integrated.

In addition to the wireless LAN scheme, the wireless communication interface 913 may support other types of wireless communication schemes such as a near field communication scheme, a proximity wireless communication scheme, and a cellular communication scheme.

The antenna switch 914 switches a connection destination of the antenna 915 between circuits of a plurality of circuits (such as circuits for different wireless communication schemes) included in the wireless communication interface 913.

The antenna 915 includes a single antenna element or a plurality of antenna elements (such as a plurality of the antenna elements included in a multiple-input multiple-output (MIMO) antenna), and is used for transmission and reception of a radio signal through the wireless communication interface 913. When, for example, the antenna 915 includes a plurality of antenna elements, the antenna 915 includes a second antenna element in addition to a first antenna element to form a MIMO antenna. Further, a plurality of antennas 915 may be provided, and when first and second antennas are included as the plurality of antennas 915, each of the antennas may perform communication using the first and second links.

Note that the smartphone 900 is not limited to the example illustrated in Fig. 12, and may include a plurality of antennas (such as an antenna for wireless LAN and an antenna of a proximity wireless communication scheme). In this case, the antenna switch 914 may be omitted from the configuration of the smartphone 900.

The processor 901, the memory 902, the storage 903, the external connection interface 904, the camera 906, the sensor 907, the microphone 908, the input device 909, the display device 910, the speaker 911, the wireless communication interface 913, and the auxiliary controller 919 are connected to each other through the bus 917.

The battery 918 supplies power to each block of the smartphone 900 illustrated in Fig. 12 through a power supply line partially indicated using a broken line in the figure. The auxiliary controller 919 operates a minimum necessary function of the smartphone 900 in, for example, a sleep mode.

In the smartphone 900 illustrated in Fig. 12, for example, the communication section 111 and control section 130 illustrated in Fig. 2 may be implemented by the wireless communication interface 913. Further, at least a portion of these functions may be implemented by the processor 901 or the auxiliary controller 919.

Note that the smartphone 900 may operate as a wireless AP (a software AP) when the processor 901 executes an AP function at an application level. Further, the wireless communication interface 913 may include the wireless AP function.

Furthermore, the smartphone 900 may include a biometric authentication section (fingerprint authentication, palm-shape authentication, voice authentication, blood vessel authentication, face authentication, iris authentication, and retina authentication). In this case, the wireless communication interface 913 by which the communication section 111 and control section 130 illustrated in Fig. 2 are implemented is configured to receive power supply from the same battery 918 as at least one of the display device 910, the speaker 911, or the biometric authentication section.

Moreover, in the smartphone 900, information is displayed using at least one of the display device 910 or the speaker 911 on the basis of communication performed with an external apparatus using the wireless communication interface 913. In this case, information related to the present technology may be output as the information from at least one of the display device 910 or the speaker 911.

### <Example of Configuration of In-vehicle Apparatus>

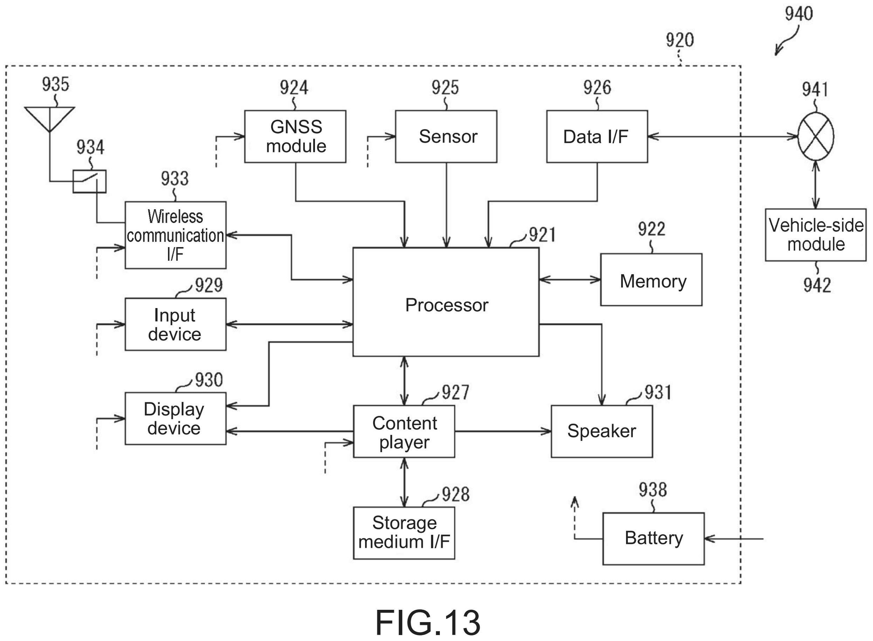

Fig. 13 is a block diagram of an example of a schematic configuration of an in-vehicle apparatus 920 to which the present technology is applied.

The in-vehicle apparatus 920 includes a processor 921, a memory 922, a global navigation satellite system (GNSS) module 924, a sensor 925, a data interface 926, a content player 927, and a storage medium interface 928. Further, the in-vehicle apparatus 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle apparatus 920. Further, the processor 921 can also control a drive system of a vehicle, such as a brake, an accelerator, or a steering, on the basis of information obtained through communication based on the present technology.

The memory 922 includes a RAM and a ROM, and stores therein a program that is executed by the processor 921, and data.

The GNSS module 924 measures a location (for example, latitude, longitude, and altitude) of the in-vehicle apparatus 920 using a GNSS signal received from a GNSS satellite.

The sensor 925 includes a sensor group such as a gyroscope, a geomagnetic sensor, and an atmospheric-pressure sensor.

The data interface 926 is connected to an in-vehicle network 941 through, for example, a terminal (not illustrated), and acquires data, such as in-vehicle data, that is generated on the vehicle side.

The content player 927 plays back content stored in a storage medium (such as a CD or a DVD) inserted into the storage medium interface 928. The storage medium interface 928 is an example of an external connection interface, and the storage medium is an example of an external storage medium.

The input device 929 includes, for example, a touch sensor that detects touch on a screen of the display device 930, a button, or a switch, and receives an operation performed by the user or information input by the user.

The display device 930 includes a screen such as an LCD or an OLED display, and displays thereon information regarding, for example, an image for the navigation function or for content to be played back. Further, the processor 921 controls display performed on the display device 930, on the basis of information received through the first or second link and on the basis of an operation of the input device 929 that is performed by a user.

The speaker 931 outputs sound for the navigation function or for the content to be played back.

Note that, in the in-vehicle apparatus 920, the navigation function and the function of the content player 927 are optional. The navigation function and the content player 927 may be excluded from the configuration of the in-vehicle apparatus 920.

The wireless communication interface 933 supports at least one of the wireless LAN standards such as IEEE 802.11a, 11b, 11g, 11n, 11ac, 11ad, 11ax, 11ay, and 11be, and performs wireless communication. The wireless communication interface 933 communicates with other apparatuses through a wireless LAN AP in the infrastructure mode. Further, the wireless communication interface 933 directly communicates with other apparatuses in the ad hoc mode or the direct communication mode such as Wi-Fi Direct.

Typically, the wireless communication interface 933 includes, for example, a baseband processor, an RF circuit, and a power amplifier. The wireless communication interface 933 may be a one-chip module in which a memory that stores therein a communication control program, and a processor that executes the program or related circuits are integrated. In addition to the wireless LAN scheme, the wireless communication interface 933 may support other types of wireless communication schemes such as a near field communication scheme, a proximity wireless communication scheme, and a cellular communication scheme.

The antenna switch 934 switches a connection destination of the antenna 935 between circuits of a plurality of circuits included in the wireless communication interface 933.

The antenna 935 includes a single antenna element or a plurality of antenna elements, and is used for transmission and reception of a radio signal through the wireless communication interface 933. When, for example, the antenna 935 includes a plurality of antenna elements, the antenna 935 may include a second antenna element in addition to a first antenna element to form a MIMO antenna.

Note that the in-vehicle apparatus 920 is not limited to the example in Fig. 13, and may include a plurality of the antennas 935. In this case, the antenna switch 934 may be omitted from the configuration of the in-vehicle apparatus 920.

The battery 938 through a power supply line partially indicated using a broken line in the figure, in the in-vehicle apparatus 920 illustrated in Fig. 13, for example, the communication section 111 and control section 130 illustrated in Fig. 2 may be implemented by the wireless communication interface 933. Further, at least a portion of these functions may be implemented by the processor 921. The battery 938 is an example of a power sharing section. The power sharing section supplies power to the control section 130, the processor 921, the input device 929, the display device 930, and the first and second antenna elements.

Further, the wireless communication interface 933 may operate as the communication apparatus described above and provide wireless connection to a terminal of the user in the vehicle.

Furthermore, the present technology may be implemented as an in-vehicle system (or vehicle) 940 that includes at least one block of the in-vehicle apparatus 920 described above, the in-vehicle network 941, and a vehicle-side module 942. The vehicle-side module 942 generates vehicle-side data such as a vehicle speed, a rotation speed of an engine, or failure information, and outputs the generated data to the in-vehicle network 941.

### <Example of Configuration of Wireless AP>

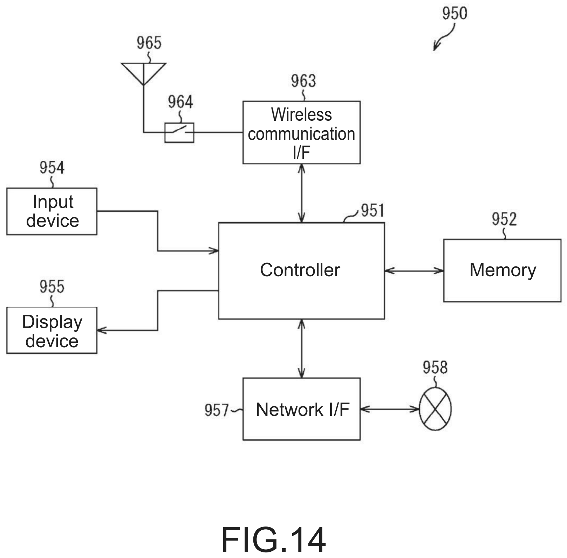

Fig. 14 is a block diagram of an example of a schematic configuration of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (such as access restriction, routing, encryption, firewall, and log management) of the Internet protocol (IP) layer and higher layers of the wireless AP 950.

The memory 952 includes a RAM and a ROM, and stores therein a program that is executed by the controller 951, and various control information (such as a terminal list, a routing table, an encryption key, a security setting, and a log).

The input device 954 includes, for example, a button and a switch, and receives an operation performed by a user.

The display device 955 includes, for example, an LED lamp, and displays thereon information such as an operation status of the wireless AP 950. Further, the display device 910 may be a projector that projects an output image onto a screen. Furthermore, a processor (not illustrated) controls display performed on the display device 955, on the basis of information received through the first or second link and on the basis of an operation of the input device 954 that is performed by a user. Further, the processor may be implemented inside the controller 951.

The network interface 957 is a wired communication interface used to connect the wireless AP 950 to a wired communication network 958. The network interface 957 may include a plurality of connection terminals. The wired communication network 958 may be a LAN such as Ethernet (registered trademark), or may be a wide area network (WAN).

The wireless communication interface 963 supports at least one of the wireless LAN standards such as IEEE 802.11a, 11b, 11g, 11n, 11ac, 11ad, 11ax, 11ay, and 11be, and provides wireless connection as an AP for a nearby terminal.

Typically, the wireless communication interface 963 includes, for example, a baseband processor, an RF circuit, and a power amplifier.

The wireless communication interface 963 may be a one-chip module in which a memory that stores therein a communication control program, and a processor that executes the program or related circuits are integrated.

The antenna switch 964 switches a connection destination of the antenna 965 between circuits of a plurality of circuits included in the wireless communication interface 963, and the antenna 965 includes a single antenna element or a plurality of antenna elements, and is used for transmission and reception of a radio signal through the wireless communication interface 963. When, for example, the antenna 965 includes a plurality of antenna elements, the antenna 965 includes a second antenna element in addition to a first antenna element.

In the wireless AP 950 illustrated in Fig. 14, for example, the communication section 111 and control section 130 illustrated in Fig. 2 may also be implemented by the wireless communication interface 963. Further, at least a portion of these functions may be implemented by the controller 951.

Note that the embodiments described above are examples for implementing the present technology, and there is a correspondence relationship between the matter in the embodiments and the claimed invention-specifying matter. Likewise, there is a correspondence relationship between the claimed invention-specifying matter and the matter in the embodiments of the present technology when those are denoted by the same name. However, the present technology is not limited to the embodiments, and can be implemented by various modifications being made to the embodiments without departing from the scope of the present technology.

Further, the processing procedures described in the embodiments described above may be considered a method including a series of the procedures, or may be considered a program used to cause this computer to execute the series of the procedures, or a recording medium that stores therein the program.

For example, a compact disc (CD), a MiniDisc (MD), a digital versatile disc (DVD), a memory card, or a Blu-ray (registered trademark) Disc can be used as this recording medium.

Note that the system as used herein refers to a collection of a plurality of components (such as apparatuses and modules (parts)) and it does not matter whether all of the components are in a single housing. Thus, a plurality of apparatuses accommodated in separate housings and connected to one another via a network, and a single apparatus in which a plurality of modules is accommodated in a single housing are both systems.

Further, the effects described herein are not limitative but are merely illustrative, and other effects may be provided.

The embodiments of the present technology are not limited to the examples described above, and various modifications may be made thereto without departing from the scope of the present technology.

For example, the present technology may have a configuration of cloud computing in which a single function is shared to be cooperatively processed by a plurality of apparatuses via a network.

Further, the respective steps described using the flowcharts described above may be performed by a single apparatus, or may be shared to be performed by a plurality of apparatuses.

Furthermore, when a single step includes a plurality of processes, the plurality of processes included in the single step may be performed by a single apparatus, or may be shared to be performed by a plurality of apparatuses.

The present embodiment may also have the following configurations.

### [Appendix]

[1] A communication apparatus, including
   a control section that controls
      a first wireless communication section that performs, using a first link, first communication with another communication apparatus that is a communication partner, and
      a second wireless communication section that performs, using a second link, first communication with the other communication apparatus,
   the control section controlling the second wireless communication section such that the second wireless communication section transmits a second signal that includes information regarding an exclusive communication period of time on a specified channel of the first link for the other communication apparatus.
[2] The communication apparatus according to [1], in which
   the specified channel is a secondary channel.
[3] The communication apparatus according to [1] or [2], in which
   the control section controls the second wireless communication section such that the second wireless communication section responds to a first signal that is transmitted by the other communication apparatus, the first signal being a request for the information regarding the exclusive communication period of time on the specified channel of the first link.
[4] The communication apparatus according to [1], in which
   when communication performed on a channel that is different from the specified channel of the first link for the communication apparatus is detected, the control section controls the second wireless communication section such that the second wireless communication section transmits, to the other communication apparatus, a first signal that is a request for the information regarding the exclusive communication period of time on the specified channel of the first link.
[5] The communication apparatus according to [4], in which
   in response to the second signal received from the other communication apparatus, the control section controls the first wireless communication section such that the first wireless communication section acquires a right to transmission on the specified channel of the first link, and
   when the exclusive communication period of time is set for the specified channel of the first link, the control section controls the first wireless communication section such that the first wireless communication section acquires the right to transmission on the specified channel of the first link after the exclusive communication period of time ends.
[6] The communication apparatus according to [4], in which
   in response to the second signal received from the other communication apparatus, the control section controls the first wireless communication section such that the first wireless communication section acquires a right to transmission on the specified channel of the first link or on the channel different from the specified channel,
   when the exclusive communication period of time on the specified channel of the first link is shorter than the exclusive communication period of time on the channel different from the specified channel, the control section controls the first wireless communication section such that the first wireless communication section acquires the right to transmission on the specified channel of the first link after the exclusive communication period of time on the specified channel of the first link ends, and
   when the exclusive communication period of time on the specified channel of the first link is longer than the exclusive communication period of time on the channel different from the specified channel, the control section controls the first wireless communication section such that the first wireless communication section acquires the right to transmission on the channel different from the specified channel of the first link after the exclusive communication period of time on the channel different from the specified channel ends.
[7] The communication apparatus according to [5] or [6], in which
   the specified channel is a secondary channel, and the channel different from the specified channel is a primary channel.
[8] The communication apparatus according to any one of [4] to [6], in which
   the first signal includes data indicating that the information regarding the exclusive communication period of time on the specified channel is requested.
[9] The communication apparatus according to [8], in which
   the first signal further includes data of a link including the specified channel for which the information regarding the exclusive communication period of time is requested.
[10] The communication apparatus according to [9], in which
   the first signal further includes data used to associate the first signal and the second signal.
[11] The communication apparatus according to [3], in which
   the second signal includes data indicating that the information regarding the exclusive communication period of time on the specified channel is reported.
[12] The communication apparatus according to [11], in which
   the second signal further includes data of the exclusive communication period of time.
[13] The communication apparatus according to [11], in which
   the second signal further includes data used to associate the first signal and the second signal.
[14] A communication apparatus, including
   a control section that controls
      a first wireless communication section that performs, using a first link, first communication with another communication apparatus, and
      a second wireless communication section that performs, using a second link, second communication with the other communication apparatus,
   the control section controlling the first wireless communication section such that the first wireless communication section transmits a second signal that includes information regarding an exclusive communication period of time on a specified channel of the first link for the other communication apparatus.
[15] The communication apparatus according to [14], in which
   the second signal is a request to send (RTS) or a multi-user RTS (MU-RTS).
[16] The communication apparatus according to [14], in which
   the specified channel is a secondary channel.
[17] The communication apparatus according to any one of [14] to [16], in which
   the control section controls the first wireless communication section such that the first wireless communication section responds to a first signal that is transmitted by the other communication apparatus, the first signal being a request for the information regarding the exclusive communication period of time on the specified channel of the first link.
[18] The communication apparatus according to [14], in which
   when communication performed on a channel that is different from the specified channel of the first link for the communication apparatus is detected, the control section controls the second wireless communication section such that the second wireless communication section transmits, to the other communication apparatus, a first signal that is a request for the information regarding the exclusive communication period of time on the specified channel of the first link.
[19] The communication apparatus according to [18], in which
   in response to the second signal received from the other communication apparatus, the control section controls the first wireless communication section such that the first wireless communication section acquires a right to transmission on the specified channel of the first link or on the channel different from the specified channel,
   when the exclusive communication period of time on the specified channel of the first link is shorter than the exclusive communication period of time on the channel different from the specified channel, the control section controls the first wireless communication section such that the first wireless communication section acquires the right to transmission on the specified channel of the first link after the exclusive communication period of time on the specified channel of the first link ends, and
   when the exclusive communication period of time on the specified channel of the first link is longer than the exclusive communication period of time on the channel different from the specified channel, the control section controls the first wireless communication section such that the first wireless communication section acquires the right to transmission on the channel different from the specified channel of the first link after the exclusive communication period of time on the channel different from the specified channel ends.
[20] The communication apparatus according to [1], further including:
   a processor;
   an input device that receives an operation performed by a user;
   a display device; and
   a first antenna element,
   the processor controlling display performed on the display device, on the basis of information received using the first link or the second link and on the basis of the operation.
[21] The communication apparatus according to [20], further including:
   a speaker;
   an external connection interface used to establish connection with a memory card or a Universal Serial Bus (USB) device;
   a second antenna element that is included in a MIMO antenna together with the first antenna element; and
   the power sharing section supplying power to the control section, the processor, the input device, the display device, the first and second antenna elements, and the external connection interface.
[22] The communication apparatus according to [20], further including
   a content player that plays back content stored in an external storage medium that is connected to the content player through an external connection interface.
[23] The communication apparatus according to [20], in which
   the display device is an LED lamp that displays thereon an operation status of the communication apparatus.
[24] A vehicle, including
   a control section that controls
      a first wireless communication section that performs, using a first link, first communication with another communication apparatus that is a communication partner, and
      a second wireless communication section that performs, using a second link, second communication with the other communication apparatus,
   the control section controlling the second wireless communication section such that the second wireless communication section transmits a second signal that includes information regarding an exclusive communication period of time on a specified channel of the first link for the other communication apparatus.
[25] A communication method, including
   controlling a first wireless communication section that performs, using a first link, first communication with another communication apparatus that is a communication partner, and a second wireless communication section that performs, using a second link, second communication with the other communication apparatus; and
   controlling the second wireless communication section such that the second wireless communication section transmits a second signal that includes information regarding an exclusive communication period of time on a specified channel of the first link for the other communication apparatus.
[26] A communication program that causes a computer to perform a communication method including:
   controlling a first wireless communication section that performs, using a first link, first communication with another communication apparatus that is a communication partner, and a second wireless communication section that performs, using a second link, second communication with the other communication apparatus; and
   controlling the second wireless communication section such that the second wireless communication section transmits a second signal that includes information regarding an exclusive communication period of time on a specified channel of the first link for the other communication apparatus.
[27] A non-transitory possible medium that records therein a communication program that causes a computer to perform a communication method including:
   controlling a first wireless communication section that performs, using a first link, first communication with another communication apparatus that is a communication partner, and a second wireless communication section that performs, using a second link, second communication with the other communication apparatus; and
   controlling the second wireless communication section such that the second wireless communication section transmits a second signal that includes information regarding an exclusive communication period of time on a specified channel of the first link for the other communication apparatus.

### Reference Signs List

- 1, 2, 3: AP MLD
- 100: communication apparatus
- 110: communication section
- 111: communication control section
- 112: communication storage section
- 113: shared data processing section
- 121: individual data processing section
- 122: signal processing section
- 123: wireless interface section
- 124: amplification section
- 130: control section
- 140: storage section
- 150: antenna
- 200: non-AP MLD
- 801: CPU
- 802: ROM
- 803: RAM
- 804: bus
- 805: input/output interface
- 806: input section
- 807: output section
- 808: storage section
- 809: communication section
- 810: drive
- 811: removable medium
- 900: smartphone
- 901: processor
- 902: memory
- 903: storage
- 904: external connection interface
- 906: camera
- 907: sensor
- 908: microphone
- 909: input device
- 910: display device
- 911: speaker
- 913: wireless communication interface
- 914: antenna switch
- 915: antenna
- 917: bus
- 918: battery
- 919: auxiliary controller
- 920: in-vehicle apparatus
- 921: processor
- 922: memory
- 924: GNSS module
- 925: sensor
- 926: data interface
- 927: content player
- 928: storage medium interface
- 929: input device
- 930: display device
- 931: speaker
- 933: wireless communication interface
- 934: antenna switch
- 935: antenna
- 938: battery
- 940: in-vehicle system (or vehicle)
- 941: in-vehicle network
- 942: vehicle-side module
- 951: controller
- 952: memory
- 954: input device
- 955: display device
- 957: network interface
- 958: wired communication network
- 963: wireless communication interface
- 964: antenna switch
- 965: antenna

## Claims

1. A communication apparatus, comprising
a control section that controls
a first wireless communication section that performs, using a first link, first communication with another communication apparatus that is a communication partner, and
a second wireless communication section that performs, using a second link, second communication with the other communication apparatus,
the control section controlling the second wireless communication section such that the second wireless communication section transmits a second signal that includes information regarding an exclusive communication period of time on a specified channel of the first link for the other communication apparatus.

2. The communication apparatus according to claim 1, wherein
the specified channel is a secondary channel.

3. The communication apparatus according to claim 1, wherein
the control section controls the second wireless communication section such that the second wireless communication section responds to a first signal that is transmitted by the other communication apparatus, the first signal being a request for the information regarding the exclusive communication period of time on the specified channel of the first link.

4. The communication apparatus according to claim 1, wherein
when communication performed on a channel that is different from the specified channel of the first link for the communication apparatus is detected, the control section controls the second wireless communication section such that the second wireless communication section transmits, to the other communication apparatus, a first signal that is a request for the information regarding the exclusive communication period of time on the specified channel of the first link.

5. The communication apparatus according to claim 4, wherein
in response to the second signal received from the other communication apparatus, the control section controls the first wireless communication section such that the first wireless communication section acquires a right to transmission on the specified channel of the first link, and
when the exclusive communication period of time is set for the specified channel of the first link, the control section controls the first wireless communication section such that the first wireless communication section acquires the right to transmission on the specified channel of the first link after the exclusive communication period of time ends.

6. The communication apparatus according to claim 4, wherein
in response to the second signal received from the other communication apparatus, the control section controls the first wireless communication section such that the first wireless communication section acquires a right to transmission on the specified channel of the first link or on the channel different from the specified channel,
when the exclusive communication period of time on the specified channel of the first link is shorter than the exclusive communication period of time on the channel different from the specified channel, the control section controls the first wireless communication section such that the first wireless communication section acquires the right to transmission on the specified channel of the first link after the exclusive communication period of time on the specified channel of the first link ends, and
when the exclusive communication period of time on the specified channel of the first link is longer than the exclusive communication period of time on the channel different from the specified channel, the control section controls the first wireless communication section such that the first wireless communication section acquires the right to transmission on the channel different from the specified channel of the first link after the exclusive communication period of time on the channel different from the specified channel ends.

7. The communication apparatus according to claim 5, wherein
the specified channel is a secondary channel, and
the channel different from the specified channel is a primary channel.

8. The communication apparatus according to claim 4, wherein
the first signal includes data indicating that the information regarding the exclusive communication period of time on the specified channel is requested.

9. The communication apparatus according to claim 8, wherein
the first signal further includes data of a link including the specified channel for which the information regarding the exclusive communication period of time is requested.

10. The communication apparatus according to claim 9, wherein
the first signal further includes data used to associate the first signal and the second signal.

11. The communication apparatus according to claim 3, wherein
the second signal includes data indicating that the information regarding the exclusive communication period of time on the specified channel is reported.

12. The communication apparatus according to claim 11, wherein
the second signal further includes data of the exclusive communication period of time.

13. The communication apparatus according to claim 11, wherein
the second signal further includes data used to associate the first signal and the second signal.

14. A communication apparatus, comprising
a control section that controls
a first wireless communication section that performs, using a first link, first communication with another communication apparatus, and
a second wireless communication section that performs, using a second link, second communication with the other communication apparatus,
the control section controlling the first wireless communication section such that the first wireless communication section transmits a second signal that includes information regarding an exclusive communication period of time on a specified channel of the first link for the other communication apparatus.

15. The communication apparatus according to claim 14, wherein
the second signal is a request to send (RTS) or a multi-user RTS (MU-RTS).

16. The communication apparatus according to claim 14, wherein
the specified channel is a secondary channel.

17. The communication apparatus according to claim 14, wherein
the control section controls the first wireless communication section such that the first wireless communication section responds to a first signal that is transmitted by the other communication apparatus, the first signal being a request for the information regarding the exclusive communication period of time on the specified channel of the first link.

18. The communication apparatus according to claim 14, wherein
when communication performed on a channel that is different from the specified channel of the first link for the communication apparatus is detected, the control section controls the second wireless communication section such that the second wireless communication section transmits, to the other communication apparatus, a first signal that is a request for the information regarding the exclusive communication period of time on the specified channel of the first link.

19. The communication apparatus according to claim 1, further comprising:
a processor;
an input device that receives an operation performed by a user;
a display device; and
a first antenna element,
the processor controlling display performed on the display device, on a basis of information received using the first link or the second link and on a basis of the operation.

20. A communication method, comprising
controlling a first wireless communication section that performs, using a first link, first communication with another communication apparatus that is a communication partner, and a second wireless communication section that performs, using a second link, second communication with the other communication apparatus; and
controlling the second wireless communication section such that the second wireless communication section transmits a second signal that includes information regarding an exclusive communication period of time on a specified channel of the first link for the other communication apparatus.
